# EUROPEAN PATENT APPLICATION

(11) **EP 3 187 766 A1**
(43) Date of publication of application: **05.07.2017**
(21) Application number: 15203200.9
(22) Date of filing: 30.12.2015
(51) Int. Cl.: F16L 37/00

(54) **PIPE CONNECTING SYSTEM**

(71) Applicant: Bomar S.A. w upadlosci ukladowej, 41-400 Myslowice (PL)
(72) Inventor: LESNIAK, Tomasz, 45-265 Opole (PL); MALOLEPSZY, Stanislaw, 43-600 Jaworzno (PL); NIEMCZYK, Piotr, 43-230 Goczalkowice Zdroj (PL); WEGRZYNEK, Bogdan, 33-300 Nowy Sacz (PL)
(74) Representative: Korga, Leokadia

(57) **Abstract**

The invention pertains to a hydraulic conduit connection system in mines.

A pipe connecting system comprising at least one part (A) having a socket or sockets and at least one part (B) that fits into the socket of part (A) characterized in that part (A) has latches located on two opposite sides of the socket whereby the latches are placed permanently in suitable sockets that on their inner surfaces have tabs that constitute guides for channels in the catches, which have a spring element, and part (B) has a conical surface that deflects the catches and then blocks parts (B) and prevents them from moving back.

## Description

The invention pertains to a hydraulic conduit connection system in mines.

Patent application EP 1714068 describes a connection of pipes with a release mechanism intended for use in systems for flow of liquids, which has at least one bell-shaped female part, for which a fitting male part is provided that constitutes the other part of the connection, which both form a leak-tight and sure connection characterized in that the female part has integrated blocking grips (tongues) whose free ends face the direction of insertion of the male part into the female part and the free ends of the blocking tongues enter the space of the female part in order to connect with the male part, and characterized in that the blocking tongues which have coupling elements that can be released using an appropriate tool in order to unblock the blocking tongues so that the male part and the female part can be separated from each other.

Patent application PL 375141 describes a connection where the connecting element, as a part of a quick-release connection for hydraulic or pneumatic connecting conduits, with a basic pipe body on which, diametrically and located on opposite sides and with a lateral offset, two two-armed latch elements are formed which in their swing point are connected to the outside wall of the basic body with an elastic connecting rib and on the free ends of their arms, which are turned to the front, have hooks turned to the inside, from which the latch element (undercut) on the outside wall of the mating element of the quick-release connection is caught when the connection is established. The backward facing arms of the latch elements are formed as spring arms whose free ends are bent to the inside in such a way that between the ends and the corresponding mating surface on the opposite side there is a gap which limits the swing movement of the spring arms is limited in the direction of the basic body to a dimension that corresponds to the distending movement of the front arms of the latch elements that fasten the hooks, which is necessary to disconnect the hooks fastened to the latch element of the mating element. If the end of the spring arms is bent and forms a loop, then the withdraw force of the latch elements is improved and the connection is protected against being disconnected unintentionally.

Patent application PL 194332 describes a liquid distribution collector Module and a system that fastens the liquid distribution collector modules where the Module comprises a tubular body with at least one radial outlet, which extends along the main axis. The module has a cap section at one end and a corresponding plug section at the other end. The drilled holes located in the plane which in fact is perpendicular to the main axis are to be located on both sides of the module at each of its ends. When two modules are fit one into another, the drilled holes of one module are aligned with the drilled holes of the other module on both sides of the unit formed in this manner. When the drilled holes are parallel, adjacent modules are fastened using a U-shaped clasp, whereby the legs of the clasp are put in the aligned drilled holes.

The connection and the system according to the invention are intended to simplify connecting tubes, in particular conduits in hydraulic systems and mines. Connections of mains conduits in spaces where there is a high risk of corrosion are currently made with connections that use mandrels or connections with threads in their designs. The former solution where mandrels are used is inconvenient because mandrels that protrude outside of the elements that connect conduits require a large quantity of space for installation and expose persons working in the vicinity of such connections to the risk of catching on the protruding mandrel.
Use of threads to connect conduits in spaces where there is a high risk of corrosion results in significant difficulties with disassembly of such connections. If the threads of the connection become corroded, it is often impossible to unscrew them.

In the connection according to the invention at least one part (A) having a socket or sockets and at least one part (B) that fits into the socket of part (A) characterized in that part (A) has latches located on two opposite sides of the socket whereby the latches are placed permanently in suitable sockets that on their inner surfaces have tabs that constitute guides for channels in the catches, which have a spring element, and part (B) has a conical surface that deflects the catches and then blocks parts (B) and prevents them from moving back.

The invention enables solid and stable connection (fastening) of two pipes because the catches exert pressure with their entire surface and not only with their edges. The system can be used for transmission of both gases and liquids.

The connection system does not limit the flow of liquids and gases because it does not reduce the cross-sections of the conduits.

## Claims

1. A pipe connecting system comprising at least one part (A) having a socket or sockets and at least one part (B) that fits into the socket of part (A) **characterized in that** part (A) has latches located on two opposite sides of the socket whereby the latches are placed permanently in suitable sockets that on their inner surfaces have tabs that constitute guides for channels in the catches, which have a spring element, and part (B) has a conical surface that deflects the catches and then blocks parts (B) and prevents them from moving back.
